Europäisches Patentamt

European Patent Office

Office européen des brevets

Publication number: **0 279 258**

**A1**

## EUROPEAN PATENT APPLICATION

(21) Application number: **88101363.5**

(22) Date of filing: **30.01.88**

(51) Int. Cl.⁴ **G01R 33/12** , G01D 5/12 , G01N 27/90

(30) Priority: **09.02.87 SE 8700472**
**15.09.87 SE 8703555**

(43) Date of publication of application:
**24.08.88 Bulletin 88/34**

(84) Designated Contracting States:
**BE DE FR GB IT**

(71) Applicant: **TÖRNBLOMS KVALITETSKONTROLL AB**

**S-725 90 Västeras(SE)**

(72) Inventor: **Törnblom, Bengt Hjalmar**
**Vikhus Rytterne**
**S-725 90 Västeras(SE)**

(74) Representative: **Boecker, Joachim, Dr.-Ing.**
**Rathenauplatz 2-8**
**D-6000 Frankfurt a.M. 1(DE)**

(54) **Device for control and/or measurement of test objects.**

(57) Device for control and/or measurement of test objects which device simulates a transducer and/or transducer movement with the aid of a plurality of eddy-current based transducers (G) which are stationary relative to each other, and a selector/distributor (5). The transducers are, for example, mounted in a plane parallel to the surface (1) of the test object and scan the test object with respect to a quantity, for example a crack (2). The resultant imaginary/simulated transducer signal is signal processed (4) by means of, for example, automatic compensation and vector transformation technique. The principle comprises automatically switching in the transducers in succession, for example in a continuously recurrent sequence, whereby signals originating from different transducers completely or partially determine different time portions of a resultant signal, and a quantity or combination of quantities is tested and/or measured by means of said transducers.

FIG. 1

## Device for control and/or measurement of test objects

The invention relates to a device for control and/or measurement of test objects according to the precharacterising part of Claim 1.

The conventional method of scanning larger surfaces in, for example, crack detection, comprises moving, for example rotating, a surface transducer, which comprises at least one coil, rapidly across the surface of a test object. In connection with the testing of rolled wire there is used, for example, a surface transducer rotating rapidly around the wire. Because of the often very high velocity of the rolled wire, short, longitudinal cracks may pass undetected between the turns of the scanning coil because of the interaction between the rotation of the coil and the movement of the wire. This is a considerable disadvantage.

The invention aims at developing a device for control and/or measurement of test objects of the above-mentioned kind, which excludes the possibility that cracks could pass the transducer or transducers undetected.

To achieve this aim the invention suggests a device for control and/or measurement of test objects according to the introductory part of Claim 1, which is characterized by the features of the characterizing part of Claim 1.

Further developments of the invention are characterized by the features of the additional claims.

In a preferred embodiment, the device is allowed to simulate a transducer movement by combining, signals from several fixed transducers each constituting a time portion of a resultant signal representing the simulated movement of a transducer. The combination of the different transducer signals, for example the sequence, can be varied, thus enabling the simulated transducer movement, for example the simulated scanning pattern or path, also to be varied. The advantage of this, in addition to the fact that no mechanically movable parts are required, is that very high transducer velocities can be simulated, which, among other things, results in the advantage that very short cracks can be detected.

The invention will now be described in greater detail with reference to the accompanying drawings showing - by way of example - in

Figure 1 an example of the invention with a group of transducers,

Figure 2 the time progress of the device,

Figures 3 and 4 examples of transducers, designed as a foil, comprised in the device according to the invention,

Figure 5 is a circuit example with balanced transducers,

Figure 6 a block diagram corresponding to Figure 5,

Figure 7 examples of integrators in the compensation function, and

Figure 8 is a detail of Figure 7.

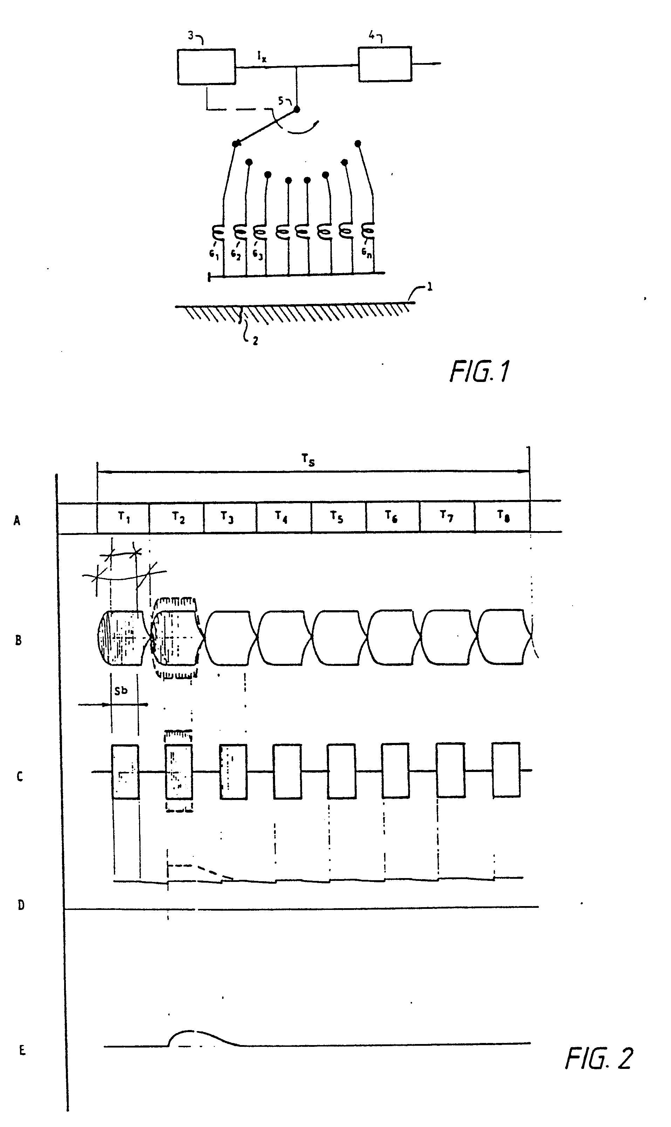

Figure 1 shows a number of transducers G positioned above different parts of a test object 1 which exhibits a crack 2. Via a selector or distributor 5 the transducers are switched in, one by one in succession, to the transducer supply unit 3 which supplies the transducer in question with a constant current $(I_k)$ of at least one frequency/carrier frequency. The selector 5 continuously proceeds step by step, and each step requires the time $T_n$, all steps together forming a sequence of the length $T_s$. The voltage across the transducer in question is measured and processed in the signal processing unit 4, the task of which is to detect, for example by rectifying and amplifying etc., the quantity, in this case the crack 2.

Figure 2 shows the time progress in Figure 1. Figure 2A shows the sequence $T_s$ along the time axis and the time $T_n$ that is allotted to the respective transducer and which, for example, controls the stepping etc. of the selector. When the selector assumes position $G_1$, the voltage across $G_1$ will grow, according to Figure 2B, because of the current $I_k$, the impedance of the transducer and the inductive time constant of the transducer coil. In a corresponding manner, a decay transient is obtained when the selector 5 steps to the next transducer, in other words, when the current $I_k$ is interrupted at $G_1$.

Figure 2B thus shows the input voltage to the signal processing unit 4 in which each carrier frequency pulse train refers to its special transducer.

The transducers are individually adjusted, for example balanced and compensated, so that the voltage drop across them is equal when, for example, the test object 1 has no defects/quantities. On the other hand, if a crack 2 is situated below the transducer $G_2$, the impedance of the transducer will change and then also the voltage across $G_2$ will change, which is shown by the dash-lined curves in Figure 2.

In Figure 2C the switching transients of the transducers have been gated away so as not to give rise to disturbance phenomena. Thus, only the central amplitude-stable part Sb in Figure 2B has been included.

Figure 2D shows the detected, for example rectified, signal in Figure 2C. By utilizing a suitable discharge time constant in the rectifier, the signal is given the appearance as shown in Figure 2D and where a possible crack below the transducer $G_2$

causes a distinct deviation from the normal level in the case of a faultless test object 1, as will be seen.

Figure 2 E shows the filtered crack signal from 2D.

As is easily realized the transducers have to be electrically very similar to each other for the level in Figure 2D to be acceptably even and stable when no quantity, i.e. in this case no crack, is present, since otherwise the crack signal would be concealed because of disturbances caused by certain differences. The differences often include also the selector/distributor 5. In the event that, for example, the signal in Figure 2E, despite measures taken to make the transducers similar to each other, should exhibit disturbances, it may be advantageous to store the signal E during one or more sequences in a normal or reference case, and to use this stored signal directly or indirectly as a comparison signal for evaluating signals measured at other times/sequences. The storing of signals from one sequence can take place with the aid of both analog and digital circuits, for example an analog shift register, a computer, etc.

If suitable, the transducers may each be continuously connected to a respective transducer supply and the selector 5 only be employed to select an input signal to the unit 4. However, the great advantage with the principle according to Figure 1 is that the same transducer supply and signal processing can be used for all the transducers. It should also be mentioned here that the selector 5 is of electronic type, for example consisting of analog switches controlled in conventional manner from, for example, crystal-controlled counters and the like.

To limit transient disturbances and the like upon switching from one transducer to another, the switching can be made, for example, via controlled resistances and the like in order to obtain a soft/successive switching.

In connection with storing signal information, for example in a computer, possibilities are offered to change the order of the different transducer signals, so as to obtain several so-called resultant signal, representing different surface scanning patterns. Thus, the stored signals/information from several transducers can be used to simulate several different transducer paths, in other words, a type of orientation principle with extensive use.

From Figures 1 and 2 it is clear that it is possible to decide from what time pulse/time portion the crack signal obtained is derived, i.e. to decide which transducer detects the crack. From this follows that it is possible to determine location of the crack/quantity on the test object.

To sum up, both the position and the orientation/extension of a quantity can be determined.

If correctly applied and performed, the invention comprises, in principle, all the advantages provided by a rotary surface transducer according to, for example, SE-A-8503894-1.

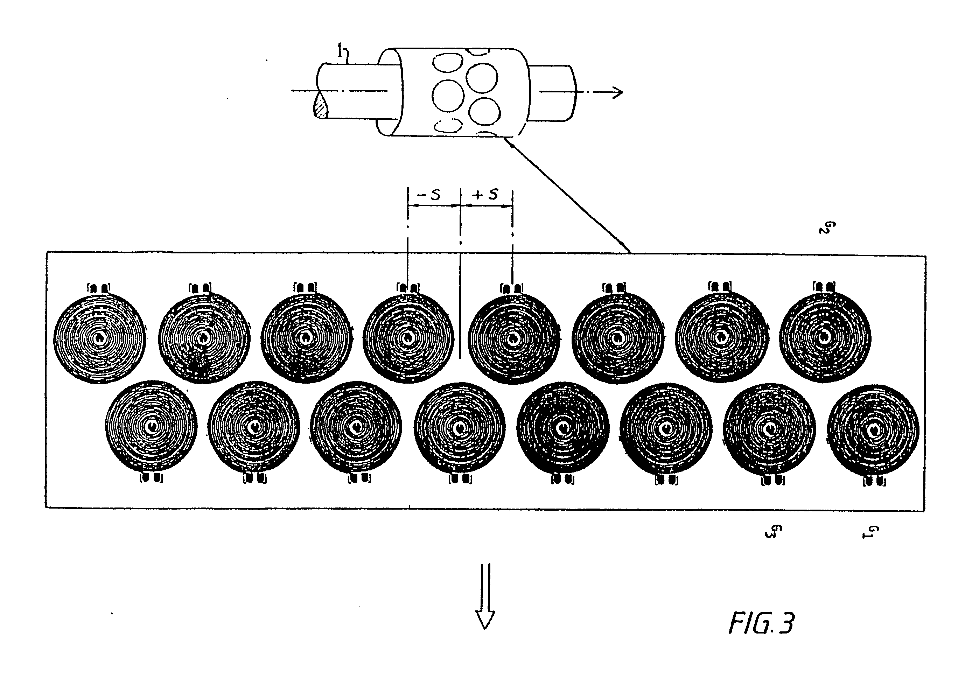

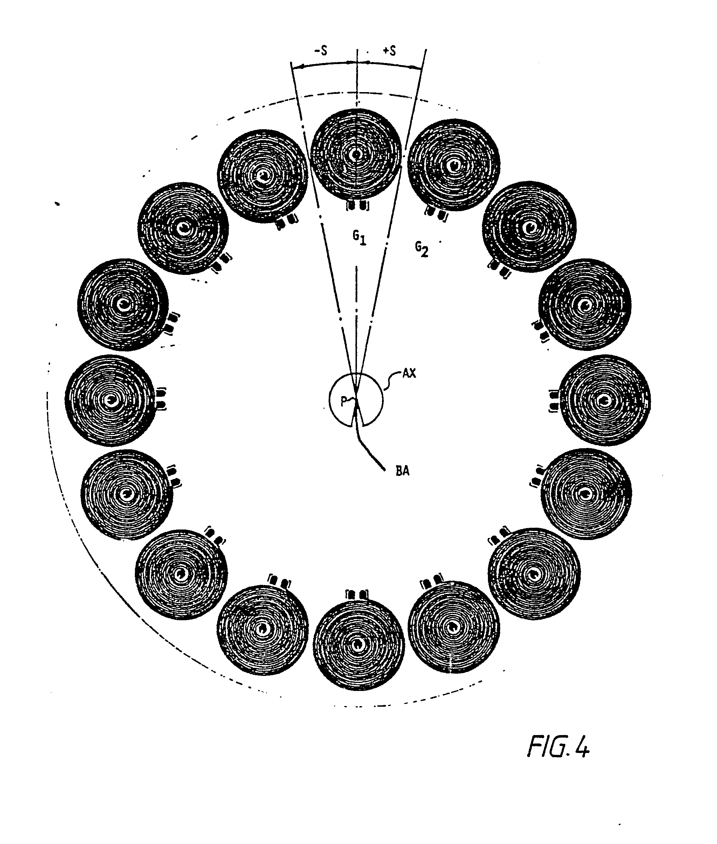

Concerning the transducers, the following can be said. Figure 1 shows a number of transducers $(G_1-G_n)$ which together form a transducer arrangement. The transducer arrangement may have different appearances, for example as is clear from Figures 3 and 4. For the invention to operate perfectly, the transducers should be as similar to each other as possible, both from a mechanical and an electrical point of view. For that reason the transducers in Figures 3 and 4 have been designed as coils of metallic foil, i.e. have been etched out in a similar manner in which conventional electronic printed circuit cards are manufactured. The surface transducer coil, i.e. the transducer, may be etched on one side of the laminated printed circuit card (chip), but, of course, it is also possible to etch a coil on each side so as to obtain double-sided transducers. In the double-sided design, the coils may be given winding directions so that their fields cooperate, whereby, the series connection, for example, takes place by connecting the coil windings via a centre lead-through. In Figures 3 and 4, which can be considered to illustrate double-sided transducers, the connecting lugs constitute the beginning and end of the series-connected coils. If it is desired to move one step further, several printed circuit card laminates/transducers can be piled/stacked on top of each other and be connected in series (or in parallel), thus obtaining a multi-layer transducer coil with a resultant higher inductance.

For several reasons it may be advantageous to place several transducers on one printed circuit card/laminate (chip) or other type of foil carrier. One reason for this may be economic and another reason may be that the transducers will in this way be almost identical with each other since the thickness and width of the foil will be the same for all transducers. Figure 4 can be viewed as a printed circuit card comprising 16 surface transducers, for example intended for crack detection on plane surfaces of a test object, the printed circuit card being placed in a plane parallel to the surface of the test object. If suitable, of course, the printed circuit card can move relative to the surface of the object and, for example, rotate about its own centre axis. Figure 3 may also consist of a printed circuit card but may comprise either a stiff printed circuit card or a flexible one. In the latter case, the printed circuit card can be bent around, for example, a rolled wire to be tested, which moves in the direction of the arrow. In this way, a transducer arrangement is obtained which surrounds the rolled wire, the entire surface of the rolled wire thus being scanned when it passes through the transducer arrangement. This can be seen as an annular transducer built up of surface transducers, in other words, a combination transducer.

If it is desired to increase the impedance of the transducer, for example because of the limited inductance in the foil coil, the coils may, for example, be provided with a ferrite core, or ferrite plates may, for example, be glued to that side of the printed circuit card which faces away from the test object or its surface.

In Figure 3 an explanatory sketch has been included which shows how the flexible transducer arrangement surrounds a wire 1. This arrangement may then, for example, be placed in a metal tube and be cooled with water which, for example, forms a water space between the metal tube and the transducers/transducer arrangement.

To prevent, for example, longitudinal cracks on the rolled wire from passing undetected between the transducer coils, these coils should be positioned, for example, in a zigzag pattern or the like, so that their field configurations overlap each other, viewed in the longitudinal direction of the rolled wire.

A transducer pattern according to figure 4 may, for example, be used on plane surfaces, such as slabs surfaces. Also in this case it may be suitable to supplement the arrangement with an inner or outer ring of transducers so as to obtain a zigzag pattern, or to cover the surface completely with transducers.

By etching out simple foil-type transducers, as described above, many interesting possibilities present themselves. It is also possible, for example, to apply the foil-type transducer to a flexible foil carrier which can be glued or adhered to the test object, for example in corners and other places which are difficult to reach, in other words, act as a type of "sticking plaster" for the transducer.

It is also possible to diffuse a metal layer onto a ceramic plate and then etch out the foil coil (spiral) direct on the plate. In this way it is possible, for example, to reduce the lift-off distance to minimum in the case of hot testing, especially if the ceramic plate is water-cooled on the foil side. In a corresponding manner the ceramic plate can be replaced by a ceramic tube, or the like, in connection with testing of elongate, for example round test objects, such as rolled wire, which is then passed through the tube. The ceramic tube is suitably cooled by water on the outside, for example via the water space.

In spite of the fact that the transducers have been made almost identical with each other with the aid of etching tech nique etc., they may, however, differ from each other to an extent that disturbs the measurement of the quantity. For this reason it is often necessary to mount trimming components for individual balancing and compensation of the respective transducer coil, for example direct on the transducer laminate adjacent to the transducers. The components in question are, for example, potentiometers and adjustable capacitors, etc., mounted in parallel with or in series with the transducer coil. Since the transducer has a Q-value, it may also be necessary to adjust the amplification in the respective transducer branch so that the transducer signals in the reference case show the same signal amplitude. Each transducer should also have an individual possibility for vertical adjustment, so that the lift-off signal in the reference case may be set at exactly the same value for all the transducer.

Producing coils by etching is nothing new per se. However, the novelty resides in the manner in which the coils are used as described in this specification, i.e. utilizing the advantages entailed by etched, multiple coils.

The transducer arrangement may advantageously have a relative motion, for example so that a limited oscillating movement or the like is imparted to the transducer arrangement. This reduces the requirement for the field configurations of the transducers are to overlap each other at rest.

As is well-known, the suppression of the lift-off dependence is an essential feature in eddy current testing using surface transducers. The Swedish patents and patent applications, for example, 7507857-6, 7813344-4 (DE-A-2952129), 8206678-8 (EP-A-83903839.5), 8302738-3 (EP-A-84902106.8), 8400698-0 (EP-A-85101296.3), 8400861-4 (EP-A-85101525.5), and others, describe different ways of coping with the LO problems.

In the case of eddy current testing, the device according to the present invention involves the same type of problems as those described in the above-mentioned patents and patent applications, for example, since in practice the transducer arrangement is almost always somewhat inclined relative to the surface of the test object. Therefore, the signal processing unit 4 in Figure 1 must in some way suppress the LO-dependence in eddy current testing. If the transducer arrangement is inclined, the LO will vary from transducer to transducer so that unit 4 will largely interpret it as if one transducer moves across the test object with a varying LO-distance. The invention therefore advantageously comprises the principles described in the above-mentioned patents and patent applications and the terminology and contents of which are otherwise applicable to this specification.

In the light of the above, the invention can briefly be described as a device based on a transducer multiplex method in combination with vector transformation technique, or perhaps simpler, vector transformation in combination with a simulated transducer movement based on the use of several transducers.

The invention also comprises compensation as described, for example, in SE-B-7813344-4, but in that case, as well as in the case of vector transformation, for example together with one imaginary/simulated transducer and transducer movement. The compensation which, by means of a control servo, aims at balancing signals emanating from a transducer to zero, operates in the present invention, for example via a multiplex method, with several transducers in a certain sequence, for example such that the respective transducer during its active time portion is completely or partially compensated. In this way, also the compensation part may be common to all transducers, which, of course, is an advantage.

Both vector transformation technique and compensation technique are known, per se, from the above-mentioned patents and patent applications. However, using these techniques for transformation and compensation of an imaginary or simulated transducer is unique and is not - as far as is known - described in the specialist literature. A consequence of this is that the invention also comprises the use of several carrier frequencies and/or carrier frequency components.

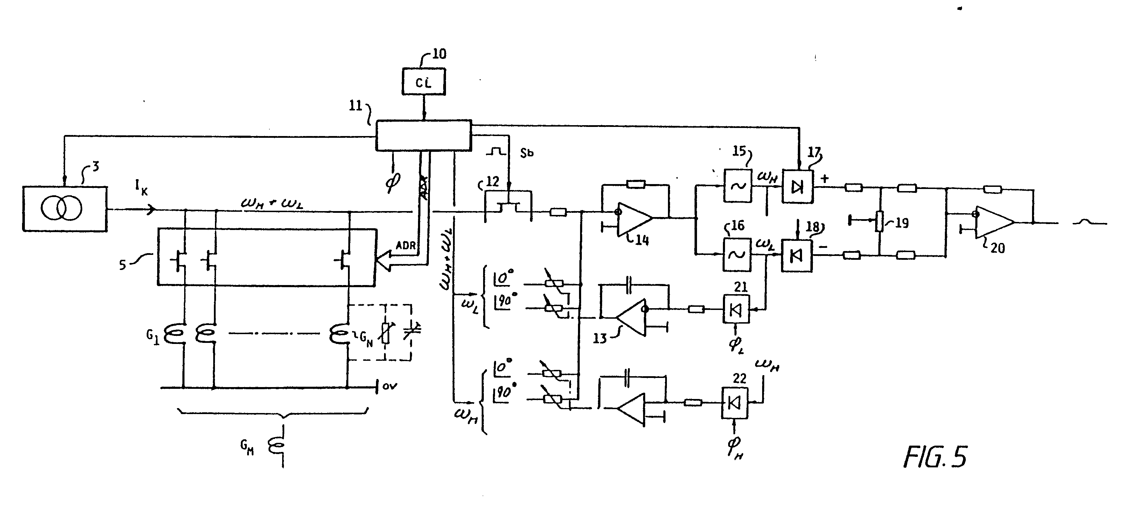

As an example of how a transducer can be individually balanced, trimming components have been shown in dashed lines for transducer $G_N$ in Figure 5. Sometimes also trimming resistors may be inserted in series with the transducer, for example to compensate for a varying $R_{on}$ in the selector/distributor 5.

Figure 5 shows a more detailed diagram of the layout and operation of the invention. Here the simulated transducer, i.e. a movable imaginary transducer which may be considered a type of "mean value transducer" representing several fixed transducers $(G_1 -G_n)$, has been shown as a movable transducer designated $G_M$. Thus, the subsequently arranged electronics believes itself to be operating with the imaginary and movable transducer $G_M$, which is characteristic of the invention.

In Figure 5, position 10 consists of a clock oscillator (CL) which may advantageously be crystal-controlled. Position 11, which is fed with clock pulses from position 10, comprises a counter, a decoder, an output for a gate pulse Sb, an output for transducer addresses ADR, etc. Position 12 is an analog gate which is opened by the pulse Sb. Position 13 with associated electronic potentiometers, including the phase-controlled rectifiers positions 21 and 22, constitute simple zero-compensation servos and should need no further explanation. Position 14 consists of a simple operational ampli fier. Positions 15 and 16 consist of band pass filters tuned to the carrier frequencies in question. i.e. to a high (H) and a low (L) frequency, respectively. In this way, the different carrier frequencies are separated so that one channel for each respective carrier frequency is obtained. (Otherwise, reference is made to the above-mentioned patents and patent applications.) Positions 17 and 18 consist of phase-controlled rectifiers, the output signals of which are used as input signals to the transformation circuit, consisting of the weighting potentiometer 19 and the subsequent operational amplifier of summation type.

As will be clear from the above, the transducer arrangement according to Figure 4 may be stationarily or, for example, movably journalled via the axis AX at point P. If, in the latter case, the transducer arrangement is allowed to move/rotate back and forth, i.e. oscillate through the angle +/- S, the field configurations from the transducers will overlap each other well, whereby, for example, the scanned surface becomes more homogeneous in nature. As an alternative to different zigzag patterns, the transducer arrangement can be oscillated, as is clear, which in certain applications is clearly more favourable. A consequence of this is that the transducers can be connected, for example via a simple cable of strips of metallic foil (B) at the centre of the transducer arrangement, to the electronic unit and the transducer supply unit. In a corresponding manner, water for cooling, for example, may be connected at point P via a suitable hose and the like.

In testing/measurement of round test objects, such as tubes and the like, the curved or tubular transducer arrangement according to Figure 3 can be oscillated in a similar manner, thus obtaining a very uniform magnetic field configuration which is especially well adapted to the detecting of so-called long axial flaws, and the like.

The combination of a high simulated transducer velocity and a limited oscillation provides considerable advantages from the view point of measuring technique compared with conventional mechanical solutions and arrangements. The tubular transducer arrangement according to Figure 3 also enables measurement of, for example, the roundness of the rolled wire, the dimension in several directions, the position of cracks along the periphery of, for example, wire, etc., among other things because of the homogeneous and uniform field configuration.

A few definitions are clear from the following:

By "TEST OBJECT" are meant, for example, wire, rods, tubes, billets, etc.

By "QUANTITY" are meant, for example, dimension, shape, change, surface defect crack; in other words, "quantity" is to be construed in a broad manner. The concept "quantity" may also include a combination of quantities.

By "TRANSDUCER" are meant, for example, both transducers, sensors and combinations of these, i.e. everything that the skilled person may include in the concept "transducer", for example an eddy-current based surface transducer coil.

By "TIME PORTION" is meant, for example, a portion of the time comprised by a time sequence $T_s$, for example $T_i$ in Figure 2.

By "PULSE" is meant, for example, a signal of a certain duration.

By "CONSTANT CURRENT GENERATOR" is meant , for example, a generator generating a constant current, for example an alternating current, and having a great internal resistance for its purpose, which results in the generator current becoming largely independent of the load resistance.

By "RESULTANT SIGNAL" is meant in this connection, for example, a signal which is directly or indirectly composed of subsignals received from different transducers at different times. Signals D and E in Figure 2 are examples of resultant signals.

By LO is meant lift-off.

It should also be pointed out the functions described in the invention can be realized by means of software as well as hardware. Using a computer or the like for storing digital measuring values, and so on, works quite excellently, and therefore this is also embraced by the invention.

The concept "quantity" may also include oxide scales, and the like, as described, for example, in the SE-A-8603604-3 (EP-A-87112238.8).

In addition to the Swedish patents and patent applications already mentioned, also SE-A-8500065-1 (EP-A-86100002.4) and 8505541-6 (EP-A-86116231.1) have features in common with the present invention.

Similarly, the technique described in SE-B-8206678-8 (EP-A-84902106.8) may be used to advantage within the scope of the signal processing part of the present invention, however, utilizing time delay of the imaginary and/or simulated transducer signal.

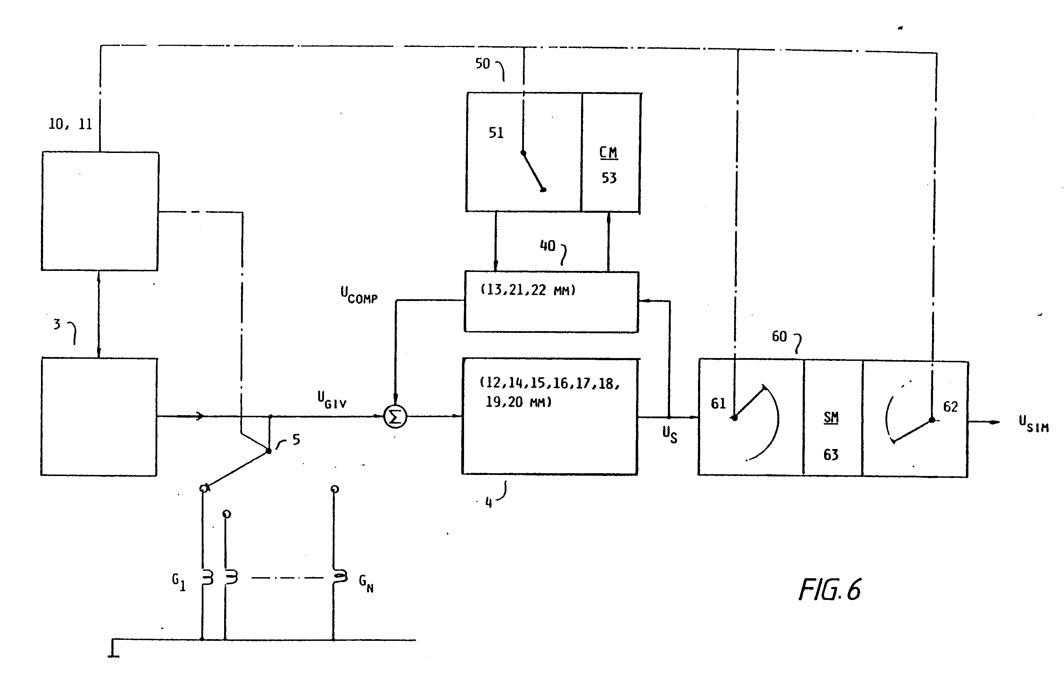

Figure 6 shows a block diagram corresponding to that shown in Figure 5 but with the difference that a number of switch/selector functions are indicated at positions 5,51,61 and 62, as well as memory blocks, compensation memory (CM), at position 53, and a signal memory (SM) at position 63. Block 50 comprises the selector/distributor function 51 and the compensation memory 53 and can be regarded as an important complement to the compensation block 40. When the selector 5 steps from transducer to transducer, the selector 51 accompanies it at the same pace and in the same sequence and informs the compensation block 40 of the compensation requirement of the transducer in question, which is stored in the compensation memory 53(CM). In this ay, the block 40 can rapidly assume the correct position for the transducer in question and thereby also rapidly generate the correct compensating voltage $U_{COMP}$. If the block 50 were to be omitted, the block 40 would not manage to compensate balance the respective transducer signal during the short time portion that the respective transducer is active. In other words, it would be necessary to use one block 40 per transducer, which for reasons which are easily understood would be disadvantageous, perhaps almost impossible, when the number of transducers is great, for example, greater than 50. With block 50 it is sufficient to have one or a few compensation blocks 40, since the performance of the block, especially as regards its speed of action in generating different compensating voltages $U_{COMP}$, is markedly increased as a consequence of the use of block 50. The memory block 50 makes possible, for example, an instantaneous course adjustment of the block 40 with the aid of information from the memory CM when switching in/activating the respective transducer.

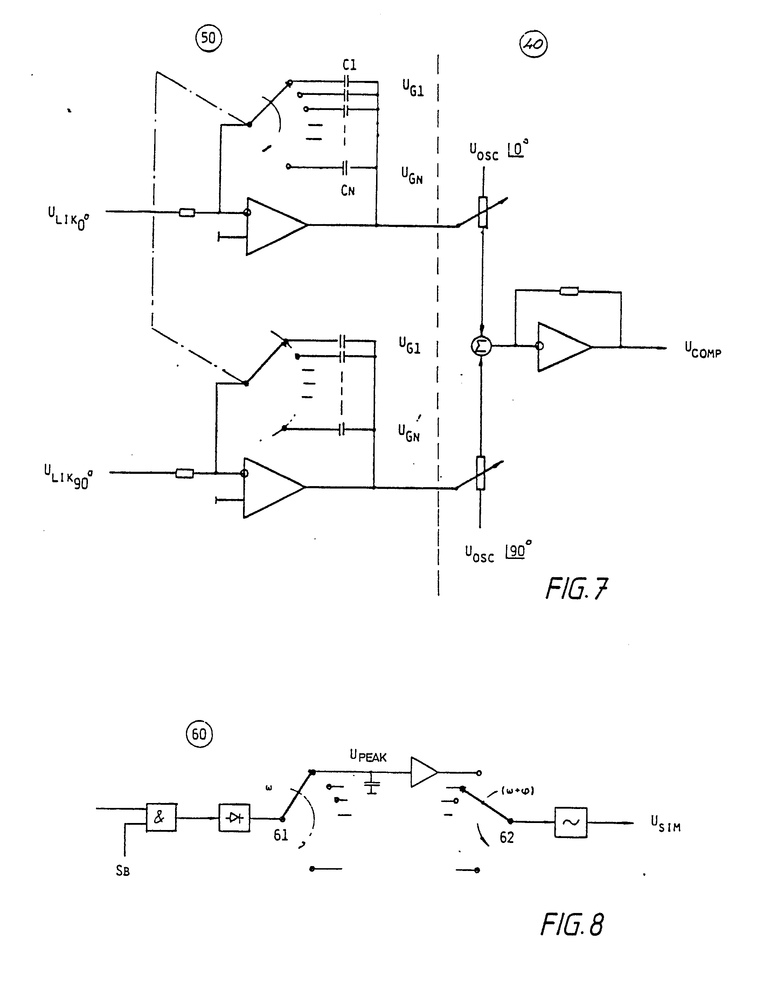

Figure 7 shows an example of how integrators, included in the compensation control function, can be provided with a number of capacitors ($C_1$-$C_N$) which act as simple compensation memories CM, storing information/voltage between the recurrent transducer switching sequences. The capacitors are arranged and selected/switched in in such a way that each transducer has its own capacitor or capacitors. In this way, the output of the integrator will intermittently assume the correct compensating voltage for the respective transducer when this is switched in and will thereafter, in the usual way, operate during the time that the transducer is active/switched in. The integrators in Figure 7 may also in themselves constitute memories, for example such that each transducer is allocated at least one integrator memory.

The integrators in Figure 7 correspond to position 13 in Figure 5, and as shown in Figure 7 they can be used for generating separate compensation vectors, for example perpendicular to each other, and thereafter be summed up to obtain a resultant vector of the desired magnitude and direction which balances the transducer in question. This resultant compensation vector may contain several carrier frequencies, thus, for example, composed of several vectors, for example one for each carrier frequency in question. The compensation vector is designated $U_{COMP}$. As will be clear, it is sufficient, in the simple case, to use capacitors as memory elements and that the compensation requirement of the respective transducer is temporarily represented by capacitor voltages $U_G$.

There is also a limit to the number of transducers that a compensation block 40 is able to serve. In the case of a large number of transducers, for example 100, the block has 1/100 of the time within which to be able to update the memory 53 and to compensate the transducer in question, which places certain demands on the control. In such cases, it may be suitable to divide the transducer into groups of, for example, 32 transducers per group, and to allot one compensation block 40 to each such group, which then means that a smaller number of blocks 40 is used for a much larger number of transducers.

If the test object moves relative to the transducer arrangement which, for example, is located in a plane above a billet surface, the distance between the transducer and the surface of the test object will probably vary somewhat during the interval between consecutive time portions in which a certain transducer is switched in/activated. The result of this is that the compensating voltage $U_{COMP}$ which is generated as a function of information in the compensation memory KM is not perfect, but comprises a certain lift-off disturbance. This disturbance occurs on the signal $U_S$ in Figure 6 and also occurs on the signal $U_{SIM}$. Since this lift-off disturbance for the most part also occurs in the signals from adjacently located transducers, which have approximately the same distance to the surface of the test object, the total effect of the lift-off disturbance will have the same character as if it originated from an imaginary, fictitious transducer $G_M$ which moves at a superimposed velocity determined by the rate of stepping of the selector/distributor 5. The consequence of this is that both $U_S$ and $U_{SIM}$ can be signal-processed via, for example, vector transformation technique, for example via positions 19 and 20 in Figure 5, for example for suppressing LO-disturbances or other undesired influences on the signal.

As is described in the literature, it is possible to choose among a number of transducers which are switched in differentially at a slow rate, i.e. a type of so-called position difference measurement, thus varying the field direction so that cracks having different orientation can be detected. However, this is something different from the successive transducer switchings described here which, in principle, bring about a relatively continuously movable field. The disadvantage of the known principles is, among other things, that they are too slow to be used when, for example, scanning test objects which move rapidly relative to the transducer arrangement and where the requirement for the minimum detectable crack length is high.

By making it possible, according to the present invention, to switch in or activate the transducers and/or the transducer signals in chosen sequences electronically and at a great velocity by using the special compensation technique in combination with a gating process, completely new perspectives are opened up, where the mechanical complexity of the transducer arrangement can be drastically reduced.

Where it is stated in this description that transducers are switched in and/or activated, it is to be understood that the term "transducer" may also embrace and mean "transducer signal".

Figure 6 indicates how a signal ($U_S$) from the signal processing block 4 is fed to the time-transforming block 60. This block comprises a selector 61 which distributes the input signal $U_S$ to the signal memory (SM) 63. This memory may consist of a parallel capacitor storage, for example as indicated in Figure 8. If the selectors 5 and 61 are allowed to operate at the same velocity, for example synchronously, the signal from the respective transducer will be stored in its memory element, for example a capacitor. The memory is then updated once per sequence, i.e. each time that the selector 61 addresses the memory element in question. If then the memory is sensed with the selector 62, a signal $U_{SIM}$ can be generated, which simulates an imaginary, fictitious transducer $G_M$. Because the memory also serves as an extender of gated signals, the signal $U_{SIM}$, after filtering, may be substantially free from switching disturbances, and the like.

It should also be noted that the selectors 61 and 62 need not run synchronously with each other but that the selector 62 may step at a different rate than the selector 61, which then means that a time transformation function is obtained which may, in certain respects, be most useful.

By varying/changing the order of connection of the memory elements to the selectors 62, different surface scanning patterns for the simulated transducer $G_M$ can be generated in a simple manner, in other words, such that the transducer is conceived as if it moved in different paths across the surface of the test object.

Position 60 is shown in more detail in Figure 8, which is self-explanatory. By gating the signal $U_S$ to the subsequent peak value rectifier, the memory cells will in this example be charged, via the selector 61, to a voltage $U_{PEAK}$, which then directly or indirectly represents the impedance and/or impedance variation of a chosen transducer, including the influence of a quantity, for example a surface crack. The selector 62, which is here intended to operate with a certain slip relative to the selector 61, senses the capacitor voltages in question, one at a time, whereby the signal $U_{SIM}$ is generated after suitable filtering. One of the characteristics of the invention is that the signal, $U_{SIM}$, represents an imaginary/simulated transducer $G_M$, and that the signal $U_{SIM}$ is signal-processed, for example via vector transformation technique, as if it directly or indirectly originated from a real transducer which, for example, moves in a certain path relative to the test object or the surface thereof.

In practice, it is always possible to attempt to multiply all the functions, thus obtaining just as many measuring units as transducers. In those cases where it is desired to operate with a large number of transducers, for example more than 50, it is immediately realized that the electronic measuring equipment will be very extensive. It is probably impossible in practice to cope with such a vast and extensive amount of electronics.

In the case of crack detection, the aim is often that the real or simulated transducer movement, for example the speed of rotation and path/surface scanning pattern of the transducers, should form such a fine-meshed scanning pattern on the surface of the test object that the demands on the minimum detectable crack length are fulfilled irrespective of the orientation of the crack on the test object, taking into consideration the relative movement of the test object with respect to the transducer arrangement. By applying the teachings of Figures 5 and 6, including combinations and variations thereof, the above-mentioned aim can be realized in the majority of conceivable applications without the electronics becoming too extensive and difficult to cope with.

Imperfections in the shape, position, etc., of the respective transducer, both with respect to the test object and between the transducers themselves, cause the simulated/imaginary transducer ($G_M$) or transducer signal, if uncompensated, to occur as a greatly disturbed, for example "jumping" transducer. The method of compensation according to the invention is a dynamic compensation individually adapted to the respective transducer, which makes possible a very rapid compensation of the respective transducer, whereby the above-mentioned disturbance can be greatly reduced.

Since the number of transducers that may be served per electronic measuring unit is limited, it may be suitable to allow the arrangement according to Figure 4 to move across the direction of movement of the test object. The same is true of Figure 3.

A long-felt wish is to be able to operate with a stationary transducer arrangement, which is possible according to the present invention. The conditions for this, however, is that the transducer jointly scan the test object so that no cracks may pass the transducer arrangement without being discovered, i.e. that the field configurations of the transducers are largely homogeneous. This is achieved by the scanning surfaces/paths of the transducers coinciding with, or even better, overlapping each other. This overlap should be of such an extent that a short crack, despite its orientation, is always capable of disturbing the eddy current field configuration to approximately the same extent irrespective of the position of the crack on the surface of the test object.

In the case of low velocities of the test object, the requirements for field overlapping may be reduced if the transducer arrangement is oscillated, for example across the direction of movement of the test object. The oscillation amplitude is then suitably adapted to the mutual distances of the transducers, for example S in Figure 4, so that the oscillation amplitude can be limited. Thus, the smallest amplitude is here S.

An effect which may be worth noting is that if, for example, a very long crack is located below one and the same transducer for a long period of time, the dynamic compensation will have compensated away the crack signal after some time, which in certain cases, especially in connection with rolled wire testing, may be disadvantageous. This may be a further reason for oscillating the transducer arrangement with a limit amplitude and frequency. A suitable oscillating amplitude may be ± (10 to 20) mm and a suitable oscillation frequency may be 1-5 Hz.

Now, if it is desired to avoid the oscillation completely, a very interesting complement may be resorted to, which, however, is somewhat more complicated. This complement is based on the "absolute" measurement being combined with a succes sive "difference" measurement. Since a number of symmetrically arranged transducers are available, the conditions are almost ideal for measuring also differentially between adjacent transducers and, for example, scanning the transducers in Figure 3 in pairs/differentially in accordance with G1-G2,G2-G3,G3-G4, and so on, in a continuous succession. In this way, it will also be possible to detect, in principle, infinite cracks. Also in this case, of course, the measured values may be stored away and the results from different sequences be compared with each other in order to sophisticate the measuring method still further.

The invention can be varied and applied in many ways within the scope of the appended claims and accompanying drawings.

## Claims

1. Device for control and/or measurement of test objects, for example billets, rolled wire, etc., with respect to at least one quantity, for example a surface crack, and/or a combination of quantities in the test object, which device comprises transducers, for example, of the eddy current type (G), such as eddy-current based surface transducer coils, which are arranged so as to at least partially sense parts, such as paths, of the test object, as well as at least one selector and/or distributor (5), for example an electronic switch, and at least one memory (53) or memory function, **characterized** in that signals, directly or indirectly originating from transducers, are adapted to be switched in and/or activated via selectors or distributors, in a certain order, for example in a recurrent, selected sequence, and that information about the current or latest compensation requirement of the transducer is at least partially adapted to be stored in successively and/or periodically updated memories (53), for example capacitor memories, and that this information is at least partially directly or indirectly adapted to be used for compensation of the switched in/activated transducer signal.

2. Device according to Claim 1, **characterized** in that the transducers are adapted to be automatically switched in, whereby signals which directly or indirectly originate from these transducers and completely or partially consist of different parts, such as time portions, are composed into a resultant signal which may be regarded as being obtained from an imaginary/simulated transducer $(G_M)$, by means of which a quantity, such as a surface crack, can be measured or detected.

3. Device according to Claim 2, **characterized** in that at least one effect caused by a varying parameter and/or variable, for example the distance (LO) between transducer and test object, is suppressed, completely or partially, via so-called vector transformation technique or the like, for example utilizing different carrier frequencies.

4. Device according to any of the preceding Claims, **characterized** in that at least one signal, for example a simulated signal, directly or indirectly originating from the transducers, is automatically compensated for, for example balanced, via a control servo.

5. Device according to any of the preceding Claims, **characterized** in that the transducers are orientated/positioned in at least two dimensions, for example in an L-shaped formation or in circular formation.

6. Device according to any of the preceding Claims, **characterized** in that the transducers are positioned around the test object, for example evenly distributed around a rolled wire and in a zigzag pattern.

7. Device according to any of the preceding Claims, **characterized** in that the position of the transducers relative to one another and/or the test object is adjustable individually and/or in groups in at least one dimension/direction, for example by automatic means.

8. Device according to any of the preceding Claims, **characterized** in that a transducer completely or partially consists of a coil of metallic foil or a winding of metallic foil, for example a winding coil etched on one or both sides of a flexible laminated sheet or foil carrier comprising all the transducers.

9. Device according to any of the preceding Claims, **characterized** in that a transducer, for example a coil of foil, is mounted directly on an insulator or other protection means, for example on the water-cooled side of a ceramic plate or tube.

10. Device according to any of the preceding Claims, **characterized** in that the transducers are individually adapted and/or adjusted, for example balanced and/or compensated with respect to impedance and amplification.

11. Device according to any of the preceding Claims, **characterized** in that the sensing of the respective transducer takes place by means of gating technique, for example such that the signal from the transducer is only sensed during the central part of the time portion (pulse) in question so that any phenomena caused by switching in an doubt will not disturb the measurement/testing.

12. Device according to any of the preceding Claims, **characterized** in that the resultant signal, directly or indirectly, is stored to be used as a comparison signal for measuring against/comparison with a signal obtained at another time.

13. Device according to any of the preceding Claims, **characterized** in that certain electronic equipment, for example a constant current generator, is common to the majority of transducers.

14. Device according to any of the preceding Claims, **characterized** in that the transducer arrangement is oscillated.

15. Device according to Claim 1, according to any of the preceding Claims, **characterized** in that at least one signal $(U_{SIM})$ is adapted to be generated as a function of signals obtained directly or indirectly from different transducers, and that this signal $(U_{SIM})$ can be regarded as being obtained from an imaginary/simulated movable transducer $(G_M)$, and that at least one such signal is signal-processed starting from the properties and/or characteristics of the imaginary/simulated transducer/transducers signal.

16. Device according to Claim 15, **characterized** in that at least one effect caused by a varying parameter and/or variable, for example the distance (LO) between the transducer and the test object, is completely or partially suppressed via so-called vector transformation technique or the like, utilizing different carrier frequencies.

17. Device according to any of the preceding Claims, **characterized** in that the transducers are adapted so as to sense paths;areas of the surface of the test object which largely coincide with or overlap each other.

FIG.1

FIG. 2

$+S$

$-S$

$G_2$

$G_1$

$G_3$

*FIG.3*

Jan. 29, 1988
21 980 25

FIG. 4

FIG. 5

FIG.6

0 279 258

Jen. 29, 1988
21 930 23

Jan. 29, 1988
21 980 De

FIG.7

FIG.8

| | **DOCUMENTS CONSIDERED TO BE RELEVANT** | | EP 88101363.5 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | FR - A - 1 586 891 (FÖRSTER) <br> * Fig. 9 * <br><br> ---- | 1 | G 01 R 33/12 <br> G 01 D 5/12 <br> G 01 N 27/90 |

**TECHNICAL FIELDS SEARCHED (Int. Cl.4)**

G 01 D 5/00

G 01 N 27/00

G 01 R 33/00

The present search report has been drawn up for all claims

| Place of search | Date of completion of the search | Examiner |
|---|---|---|
| VIENNA | 31-05-1988 | KUNZE |